# EUROPEAN PATENT APPLICATION

(11) **EP 4 591 979 A1**
(43) Date of publication of application: **30.07.2025**
(21) Application number: 24154216.6
(22) Date of filing: 26.01.2024
(51) Int. Cl.: B01J 21/04, B01J 21/06, B01J 23/80, B01J 35/39, B01J 37/02

(54) **PHOTOCATALYSIS FOR METHANOL PRODUCTION**

(71) Applicant: Nederlandse Organisatie voor toegepast-natuurwetenschappelijk Onderzoek TNO, 2595 DA 's-Gravenhage (NL)
(72) Inventor: SASTRE CALABUIG, Francesc, 2595 DA's-Gravenhage (NL); BUSKENS, Pascal Jozef Paul, 2595 DA's-Gravenhage (NL); SANDERSE, Arnaud Theodoor, 2595 DA's-Gravenhage (NL); MEULENDIJKS-KIGGEN, Nicole Maria Matthias, 2595 DA's-Gravenhage (NL); HOLLANDERS, Sofie, 2018 Antwerpen (BE); MARINA BARBIER, Sara Luisa, 6223 EP Maastricht (NL); MAST, Adriana Pieternella, 6223 EP Maastricht (NL); MBALLA MBALLA, Monique Alexina, 6223 EP Maastricht (NL)
(74) Representative: V.O.

(57) **Abstract**

The invention is directed to a process for the photocatalytic production of methanol from carbon oxide (*i*.*e*. CO₂ and/or CO), said process comprising feeding a feed stream comprising carbon oxide and a hydrogen stream into a reactor that contains a plasmonic catalyst comprising plasmonic Cu/Zn nanoparticles, and irradiating said plasmonic catalyst with light having an irradiance intensity of at least 10 kW/m² at a pressure of at least 5 bar absolute, such that said carbon dioxide and hydrogen react to form methanol, and leading a product stream comprising methanol out of the reactor.

## Description

### TECHNICAL FIELD

The invention is in the field of methanol production by hydrogenation of carbon dioxide and/or carbon monoxide. In particular, the invention is in the field of methanol production from carbon dioxide and/or carbon monoxide, and hydrogen using a plasmonic catalyst and light.

### BACKGROUND

Conventionally, methanol (MeOH) is mainly produced by steam-reforming of natural gas to create a synthesis gas (*i.e.* a blend of carbon monoxide and hydrogen, CO/H₂ blend). Feeding this synthesis gas into a reactor with a catalyst material leads to the formation of MeOH and water vapor. Different feedstocks can be used to produce MeOH, but natural gas is conventionally preferred from an economical perspective. The production of MeOH from carbon dioxide (CO₂) and/or carbon monoxide (CO) and (green) hydrogen, rather than from synthesis gas would be strongly preferred from a sustainability perspective and to transition towards a circular economy (*see* for instance Zhang et al. Frontiers in Energy Research, February 2021, Volume 8, Article 621119).

Two chemical routes can be envisioned for the conversion of CO₂ and/or CO to MeOH, as summarized with reaction equations I-III in Table 1 below. Reaction I is the direct conversion of CO₂-to-MeOH. Alternatively, an indirect route with CO₂ can be used which is referred to as CAMERE (carbon dioxide hydrogenation to form MeOH via the reverse water-gas shift (rWGS) reaction). wherein, CO₂ is converted to CO through the reverse water gas shift (rWGS) reaction initially (Reaction II), and subsequently MeOH is formed through the CO-to-MeOH reaction (Reaction III). Reaction II, giving CO as a product, is typically also a competitive reaction in the direct MeOH synthesis. Reaction III also shows that MeOH can be directly produced from CO.

**Table 1**

| **Reaction** | **Equation** | **ΔH_{298K}** |
|---|---|---|
| Reaction I, CO₂-to-MeOH | CO₂ + 3 H₂ → CH₃OH + H₂O | - 49.4 kJ mol⁻¹ |
| Reaction II, rWGS | CO₂ + H₂ → CO + H₂O | + 41.0 kJ mol⁻¹ |
| Reaction III, CO-to-MeOH | CO + 2 H₂ → CH₃OH | - 90.4 kJ mol⁻¹ |

Zhang et al. Journal of CO2 Utilization 17 (2017) 263-272, disclose methanol production by CO₂ hydrogenation using alumina microsphere supported Cu/Zn-based catalysts (CZA catalysts) and conventional heating to reaction temperatures of about 220 °C and about 240 °C. MeOH and CO were the only carbon-containing products found and the selectivity for methanol over CO is poor, namely in the range of 33.6 to 58.9 C-mol%.

Xie et al. Nature Communications 11:1615 (2020) 1-11 disclose CO₂ hydrogenation by using CZA catalyst applying only conventional heating in a range of 200 to 300 °C, and as comparison the CZA catalyst with a combination of conventional heating in a range of 200 to 300 °C and light irradiation to produce methanol. It was observed that, when irradiated with 350-800 nm light, photo-enhancement in MeOH production was only observed at 225 °C (32% increase in space time yield, STY) with only a slight change in methanol over CO selectivity. However, at reasonable space time yields, methanol was still produced with a selectivity of only less than 80%.

Zhang et al. Nature Communications (2022) 13:1512 disclose a black indium oxide-tandem photothermal CO₂-H₂ methanol selective catalyst. This catalyst catalyzes the production of methanol from CO₂ with selectivities of 33.24% and 49.23%.

There thus remains a need to provide an improved process for the preparation of methanol by the hydrogenation of CO₂ and/or CO, in particular a method that is improved in terms of methanol yield and/or selectivity.

### SUMMARY OF THE INVENTION

An object of the present invention is to provide a method for production of methanol from carbon dioxide and/or carbon monoxide, and hydrogen, in good yields and selectivity. The present inventors found that this can be achieved by using a plasmonic catalyst and irradiating this catalyst with sufficiently intense light, without the requirement of substantial additional external heating of the reaction. Surprisingly, in particular embodiments of the present invention, this principle leads to extremely high selectivity in methanol, without diminishing the product yield.

Accordingly, in a particular aspect, the present invention is directed to a process for the photocatalytic production of methanol from carbon dioxide and/or carbon monoxide (herein also referred as a carbon oxide), said process comprising feeding a carbon oxide and a hydrogen stream into a reactor that comprises a plasmonic catalyst comprising plasmonic nanoparticles, and irradiating said plasmonic catalyst with light such that said carbon oxide and hydrogen react to form methanol, wherein said reactor is not additionally heated during the reaction, leading a product stream comprising methanol out of the reactor.

A further aspect of the invention is directed to the plasmonic catalyst that can be used for the process. A preferred embodiment of this catalyst is a plasmonic catalyst comprising plasmonic nanoparticles comprising Cu and ZnO supported on a carrier material, wherein said carrier material is selected from the group consisting of metal oxides as aluminum oxides such as Al₂O₃, titanium oxides such as TiO₂, cerium oxides such as CeO₂, zirconium oxides such as ZrO₂, activated carbon, copper oxides such as CuO, kaolinites such as Kaolin F and Koalin N, clay such as Clay S, olivines such as Olivine 1, huntites such as Huntite 5, zeolites such as Zeolite A, aluminum trihydrate, and combinations thereof.

### BRIEF DESCRIPTION OF THE FIGURES

Figure 1 shows UV-Vis reflectance spectra of exemplary catalysts according to the present invention.
Figure 2 shows a powder X-ray diffraction spectrum (XRD) of an exemplary CZA catalyst in reduced (top) and calcined (middle) states according to the present invention. It also shows the XRD spectrum of a Al₂O₃ carrier material (bottom).
Figure 3 shows image of Energy Dispersive X-Ray (EDX) analysis of a CZA catalyst in accordance with the present invention.
Figure 4 shows methanol production rate of exemplary catalysts according to the present invention.
Figure 5 and 6 show the methanol production rate of an exemplary CZA catalyst according to the present invention under different light intensities and pressures.
Figure 7 shows methanol production rate of exemplary CZA catalysts according to the present invention.

### DETAILED DESCRIPTION OF THE INVENTION

The present invention is directed to method for production of methanol from carbon oxide and hydrogen in good yields and selectivity. The term carbon oxide herein refers to carbon dioxide and/or carbon monoxide. The method described herein is applicable to the conversion of carbon dioxide to methanol, to the conversion of carbon monoxide to methanol and to the conversion of a combination of carbon monoxide and carbon dioxide to methanol. In preferred embodiments, the process is directed to the conversion of carbon dioxide and the term carbon oxide used herein refers to carbon dioxide specifically.

The present inventors surprisingly found that by applying sufficiently intense light and sufficient pressure, carbon oxide can be converted into methanol by the plasmonic catalyst in good yields and excellent selectivity. Furthermore, the application of sufficiently intense light and sufficient pressure renders external heating unnecessary.

In a particular embodiment of the present process for the photocatalytic production of methanol from carbon oxide, the process comprising feeding a feed stream comprising carbon oxide (*i.e.* carbon dioxide and/or carbon monoxide), and a hydrogen stream into a reactor that contains a plasmonic catalyst comprising plasmonic Cu/Zn nanoparticles, and irradiating said plasmonic catalyst with light having an irradiance intensity of at least 10 kW/m² at a pressure of at least 5 bar absolute, such that said carbon dioxide and hydrogen react to form methanol, and leading a product stream comprising methanol out of the reactor.

The term "plasmon" as used in this application is meant to refer to surface plasmons. By analogy, the term "plasmonic" as used in this application is meant to refer to the presence of surface plasmons. The term "plasmonic particle" as used in this application is meant to refer to a surface-plasmon supporting structure. A plasmonic particle typically is a nanoparticle of a conducting material, as for instance explained in Ghoussoub Energy Environmental Science 12 (2019) 1122-1142, that details a review on principles of photothermal gas-phase heterogeneous CO₂ catalysis where plasmonic particles are described. The conducting material can be a metal or metallic material. This term is meant to include structured surfaces and nanoparticles comprising conductive materials. Plasmonic particles are characterized by exhibiting plasmon resonance. The plasmon resonance can be at one or more specific plasmon resonance wavelengths. Rod-like nanoparticles, for example, can have two distinct plasmon resonance wavelengths, one derived from the longer dimension of the particle and the other deriving from the shorter dimension of the particle. It is also possible that plasmon resonance occurs within a certain spectral range. This may depend, for instance, on the particle size distribution of the plasmon particles.

The term "plasmonic heating" as used in this application is meant to refer to the release of heat from a plasmonic particle due to the absorption of light through plasmonic resonance.

Also encompassed by the term "plasmonic catalytic process" is the situation where a plasmonic catalytic particle is brought into the excited state by absorption of light after which the plasmon catalytic particle relaxes from this "hot state" via a charge transfer (such as an electron transfer) to one or more reactants or one or more catalysts.

Without wishing to be bound by theory, it is considered that the mechanism promoting the reaction appears to involve a synergistic operation of photothermal and photochemical contributors. The main contribution to the activity may result from the plasmonic Cu/Zn nanoparticles (NPs) acting as nano-heaters to promote the reaction photothermally, while charge transfer processes contribute to desorption the formed methanol from the catalyst surface.

The term "nanoparticles" (abbreviated as NPs) as used in this application is meant to refer to particles with at least one dimension (particle size) of from about 1 to about 1000 nm, such as from about 1 to about 500 nm, from about 2 to about 300 nm or from about 5 to about 200 nm. These dimensions can be measured with dynamic light scattering as the volume median (Dv50), at least above 10 nm. For smaller particle sizes transmission electron microscopy (TEM), in particular High-Angle Annular Dark Field Scanning TEM, can be used to determine the particle size based on number average, equivalent sphere diameter. This includes spherical or approximately spherical (cuboidal, pyramidal) particles with a diameter (or at least two or three dimensions) in these ranges. In case of spherical particles the one dimension is preferably the diameter of the particles. For non-spherical particles, the one dimension can, for instance, be the equivalent spherical diameter which is defined as the diameter of a sphere of equivalent volume. The term "nanoparticle" is also meant to include rod-like nanoparticles, also known as nanorods, or any other shaped nanoparticle. Nanorods typically have an aspect ratio (longest dimension divided by the shortest dimension) in the range of 2-40, more often in the range of 2-20, such as in the range of 3-10. Typically, each of the dimensions of a rod-like nanoparticle is in the range of from about 1 nm to about 1000 nm.

The term "Cu/Zn nanoparticles" (abbreviated as Cu/Zn NPs) herein refers to NPs that comprise Cu and/or Zn. In typical embodiments, the NPs of the present invention comprise Cu and/or ZnO. In particular embodiment, the plasmonic catalyst comprises Cu nanoparticles (*e.g*. spherical having a diameter of about 10 ± 3 nm) surrounded by smaller ZnO nanoparticles. The NPs may be doped with promoters and/or dopants such as alkali and alkaline-earth metals (*e.g.* K, Ba, Na, Ca, Cs, Sr, *etc.*), rare-earth metals (*e.g.* La, Ce, Nd, *etc.*), transition metals (*e.g.* Cr, Mn, Co, Ru, Mo, Pd, *etc*.), and main group metals (*e.g.* Al, Mg, Zn, *etc*.). Moreover, the Cu NPs may comprises additional metal and may for instance by bimetallic, or trimetallic *etc.* For instance, the Cu NPs may be bimetallic NPs comprising Cu and Ni (so-called Ni-Cu NPs). Additionally or alternatively, the NPs may contain defects. Accordingly, the reference in this disclosure to NPs as Cu/ZnO NPs, includes *i.a.* NPs consisting essentially of Cu and ZnO, doped Cu/ZnO NPs, Cu/ZnO NPs with defects (in the art also referred to as Cu/ZnO₁₋ₓ NPs), oligometallic NPs such as Cu-Ni/ZnO NPs, and combinations thereof.

Copper is a strongly plasmonic metal which can act as the conductive material in plasmonic catalyst, while zinc and in particular zinc oxide can act as a semiconductor material. Irradiation of the Cu NP with the light can create hot charge carriers (*e.g.* holes or electrons) which can be transferred across the Schottky junction formed at the metal/semiconductor interface. The general principle behind this is *i.a.* described in the aforementioned Ghoussoub Energy Environmental Science 12 (2019) 1122-1142.

The NPs of the present invention may be supported on a carrier material, which is preferably selected from the group consisting of aluminum oxides such as Al₂O₃, titanium oxides such as titania and/or titania with oxygen vacancies (TiO₂₋ₓ), cerium oxides such as ceria and/or ceria with oxygen vacancies (CeO₂₋ₓ), zirconium oxides such as zirconia and/or zirconia with oxygen vacancies (ZrO₂₋ₓ), copper oxides such as CuO, activated carbon, kaolins (Al₂O₃ ·2SiO₂ ·2H₂O) such as kaolin F and koalin N, clays such as clay S, olivines ((Mg,Fe)₂SiO₄) such as olivine 1, huntites (Mg₃Ca(CO₃)₄) such as huntite 5, zeolites such as zeolite A, aluminum trihydrate (abbreviated as ATH), and combinations thereof, preferably wherein said active carrier comprises aluminum oxides such as Al₂O₃, titanium oxides such as TiO₂, cerium oxides such as Ce₂O₃ and/or CeO₂, zirconium oxides such as ZrOz or combinations thereof. A carrier comprising a combination of these materials may for instance be based on CeO₂-ZrO₂ and activated carbon. Particular good results were obtained with Al₂O₃ and TiO₂, which are therefore preferred. The natural mineral carriers kaolins, olivines, huntites, zeolites, ATH are preferred for environmental reasons. Such mineral carriers are for instance commercially available from Sibelco NV, Belgium. The average chemical and mineralogical compositions of the natural mineral carriers are given in Table 2 and should only be used as indication.

**Table 2: Indicative chemical and mineralogical composition of the natural mineral carriers.**

| **Description** | | **Kaolin N** | **Kaolin F** | **Clay S** | **Olivine 1** | **Huntite 5** | **Zeolite A** | **ATH** |
|---|---|---|---|---|---|---|---|---|
| Brandname* | | SL-S55 | Fossanova | Colclay D90 | No 11 | HS | Chabamin J1000 | SG7HB |
| **Chemistry** | Fe₂O₃ % | 1.1 | 4.8 | 8.1 | 6.8 | 0.06 | 4.0 | 0.01 |
| | Al2O₃ % | 25.4 | 24.0 | 17.8 | 075 | <0.1 | 16.0 | 65.0 |
| | TiO₂ % | 0.25 | 0.41 | 1.26 | <0.1 | n.d. | 0.5 | <0.02 |
| | K₂O % | 2.17 | 1.99 | 1.14 | 0.05 | <0.1 | 6.5 | <0.02 |
| | CaO % | 0.25 | 0.41 | 1.07 | 0.20 | 14.9 | 5.5 | 0.01 |
| | MgO % | 0.73 | 0.72 | 2.42 | 46.5 | 34.2 | 1.7 | 0.2 |
| | Na₂O % | 0.02 | 1.45 | 4.46 | 0.05 | <0.01 | 1.0 | 0.01 |
| | SiO₂ % | 61.2 | 57.0 | 54.8 | 41.5 | 1.10 | 54.0 | <0.1 |
| Loss on ignition | 950 °C % | 8.2 | 8.2 | 8.0 | 4.0 | 49.73 | 10.0 | 35.0 |
| **Mineralogy** | Quartz % | 27 | 13 | 7 | | | 1 | |
| | Kaolinite % | 48 | 43 | 13 | | | | |
| | 2:1 clay % | 25 | 24 | 69 | | | | |
| | Olivine % | | | | 63 | | | |
| | Serpentine + Talc % | | | | 20 | | | |
| | Huntite % | | | | | 87 | | |
| | Hydromagnesite % | | | | | 10 | | |
| | Gibbsite % | | | | | | | 99 |
| | Zeolite % | | | | | | 75 | |
| | Feldspar % | | | | | | 18 | |
| | Others % | <1 | 3 | 2 | 17 | 3 | 6 | |

| | | | | | | | | |
|---|---|---|---|---|---|---|---|---|
| * as commercialized by Sibelco NV, Belgium ** all amounts are express in weight percentages | | | | | | | | |

The term carrier material herein includes carrier and promotor materials. Hence, in typical embodiments the carrier material may be present in an amount in the range of 2-75 wt%, based on the total weight of the plasmonic catalyst.

In embodiments wherein the plasmonic nanoparticles comprise Cu and Zn, the plasmonic catalyst preferably comprises Cu in an amount in the range of 5 to 70 wt%, preferably 40 to 70 wt% and/or Zn in an amount in the range of 2.5 to 40 wt%, preferably 10 to 40 wt%, based on the total weight of the plasmonic catalyst.

The weight ratio of Cu and Zn in the plasmonic nanoparticles is preferably in the of 1 : 1 to 5 : 1, more preferably 1.5 : 1 to 4 : 1.

The process involves irradiating said plasmonic catalyst with light. The light comprises one or more wavelengths which are absorbed by at least part of the plasmonic nanoparticles in the presence of a reaction mixture comprising carbon oxide and H₂.

The power of light that is irradiating the plasmonic catalyst is herein expressed as the power per surface as received by the catalyst. The phrase 'irradiating with light' and 'exposing the catalyst to light' as used in this application is meant to include both irradiating the reaction mixture and/or catalyst with light and illuminating the reaction mixture and/or catalyst. The light can typically have a photon energy in the range of about 1.24×10⁻³ to about 3.88eV and can accordingly comprise ultraviolet (UV), visible, near-infrared (NIR), and infrared (IR) light. The light is preferably continuous (CW), but alternatively a pulsed light source can be used. The light can be focused (*e.g.* a laser beam), the reaction mixture and/or catalyst can also be homogenously exposed *e.g*. to ambient light, simulated solar light, natural sunlight, light emitting diode (LED) light. The light to which the reaction mixture and/or catalyst is exposed may be monochromatic, but may also span a specific range of the spectrum. In a specific embodiment, natural sunlight may be used in combination with an energy efficient man-made light source to continuously operate the chemical process and constant light intensity. In some embodiments, concentrated natural sunlight is used.

Preferably, the light is non-coherent and preferably, the light is not laser light. Preferably, the light is solar light or concentrated solar light.

The irradiated light is of sufficient intensity that additional external heating is not required. It was found that irradiation with a power of at least 10 kW/m² is sufficiently intense. The light can be monochromatic or broad band light, containing wavelengths of ultraviolet (UV), visible (Vis), near-infrared (NIR), and/or infrared (IR) light spectrum. The light is preferably broad band spectrum, preferably Solar light (Air Coefficient AM 1.5). As used herein, AM 1.5 refers to air mass coefficient as for instance according to IEC 60904, *e.g*. according to IEC 60904:2020. In particular AM 1.5 may refer to the global reference spectral irradiance AM 1.5 (AM 1.5G) defined in IEC 60904-3. Hence, the process preferably comprises irradiating said plasmonic catalyst with light having a power of at least 10 kW/m², more preferably at least 10 kW/m² AM 1.5. AM 1.5 involves light containing wavelength from approximately 350 nm to 2500 nm (see also https://www.nrel.gov/grid/solar-resource/spectra-am1.5.html and ASTM G-173). As the catalyst is capable of interacting with broad band light, this means that it can also interact with monochromatic light in the UV, Vis and/or even IR light spectra, *e.g.* LED light 450 nm, Laser Diode at 850 nm.

In typical embodiments, the irradiation has a power of at least 12 kW/m², or *e.g.* at least 15 kW/m², and *e.g.* less than 100 kW/m²; preferably with air mass coefficient AM 1.5. Preferably, the power is in the range of 12 - 100 kW/m², more preferably 15 - 100 kW/m² AM 1.5. In the art, the unit "kW/m² AM 1.5" is also referred to as "sun".

In practice, the process may involve exposure to actual ambient solar light or concentrated solar light obtained by concentrating actual ambient solar light.

In an optional embodiment, the light has a power in the range of 500 - 600 nm of 15 - 25%, *e.g.* 17 - 23% relative to total irradiance in the range 400 - 1100 nm.

It may be appreciated that when another light spectrum is used than the solar irradiance spectrum such as AM 1.5 or an artificial equivalence thereof, the irradiance intensity of the light may be adjusted accordingly. Based on the present disclosure, the person skilled in the art can determine the amount of light that is sufficient to convert carbon oxide to methanol in accordance with the present invention.

Advantageously, the present process does not require additional external heating. Hence, irradiation by the light provide sufficient energy for good conversion of the carbon oxide to methanol. Even more advantageously, in the absence of additional external heating, the selectivity towards methanol is very high.

The conversion of carbon oxide to methanol in the present process is exothermal, meaning that reactor temperatures may still rise to elevated temperatures (*i.e.* temperatures above 20 °C), in particular if the reactor design allows elevated temperatures (*e.g*. if the reactor is thermally insulated). In particular embodiments, an elevated temperature may be preferable to keep the produced methanol in a gaseous phase until it is led out of the reactor in the product stream. Accordingly, the bulk temperature inside the reactor may be up to 225 °C, or up to 100 °C as determined by a thermocouple that is positioned in the reactor at least 2 cm away from the plasmonic catalyst, typically at least 2 cm away from a catalyst bed comprising the plasmonic catalyst. Such temperatures can be reached without additional external heating. Notably, due to the plasmonic nature of the catalyst and the process, the temperature of the plasmonic catalyst itself may be higher than the bulk temperature inside the reactor (*see e.g.* Xu et al. ChemPhotoChem 2022, 6, e202100289).

The selectivity of the present process can also be expressed as a the molar amount of MeOH that is formed over all carbon-containing products that are formed. Advantageously, the selectivity of the present process for producing MeOH may be more than 80 mol%, more preferably more than 95 mol%.

In particular embodiments wherein the feed stream comprises carbon dioxide and essentially no carbon monoxide, the product stream which comprises methanol, may comprise carbon monoxide that is unintentionally but possibly formed in the rWGS as explained herein-above. The process of the present invention, however, can give methanol in a selectivity such that the product stream may comprises a molar ratio of methanol to carbon monoxide of at least 5 : 1, preferably at least 6 : 1. Essentially no carbon monoxide herein means that the feed stream comprises less than 1 wt%, or less than 0.1 wt% carbon monoxide, based on the total weight of carbon oxide in the feed stream.

### EXAMPLES

The invention can be illustrated by the following non-limiting examples.

### Example 1 - preparation of the plasmonic catalyst

The plasmonic catalysts were prepared according to the following synthesis protocol for ammonia-driven deposition precipitation of Cu and Zn on a carrier material such as y-Al₂O₃.

Copper(II) carbonate basic and zinc carbonate basic were dissolved in the demi-H₂O. The carrier material, *e.g*.

Al₂O₃, was added under vigorous stirring. Ammonia solution was added until the pH of the initial suspension is between 11-12. The mixture was stirred vigorously for 1 h to obtain a homogeneous suspension. Ammonia was allowed to evaporate by flushing nitrogen through the mixture. The mixture was subsequently stirred for 12 h at 95 °C. After precipitation is complete, the mixture was filtered to obtain the precipitate, which was washed extensively with distilled water and dried at 100 °C for 12 h subsequently. The dried samples were calcined at 350 °C in static air for 4 h (5 °C/min) in muffle furnace.

The catalysts included in Table 3 were prepared.

**Table 3**

| **Sample Name** | **Cu (wt%)** | **Zn (wt%)** | **Al (wt%)** | **Cu/Zn ratio** |
|---|---|---|---|---|
| CuO/ZnO/Al₂O₃ (CZA) | 24.93 | 11.78 | 21.63 | 2.12 |
| CuO/ZnO/KaolinF | 23.8 | 11.29 | 5.8 | 2.11 |
| CuO/ZnO/KaolinN | 23.84 | 11.22 | 5.91 | 2.13 |
| CuO/ZnO/ClayS | 24.44 | 14.69 | 3.4 | 1.66 |
| CuO/ZnO/Olivine1 | 24.38 | 11.17 | 0.17 | 2.18 |
| CuO/ZnO/Huntite5 | 24.82 | 11.46 | 0.04 | 2.17 |
| CuO/ZnO/ZeoliteA | 24.8 | 11.6 | n.d. | 2.14 |
| CuO/ZnO/ATH | 27.8 | 12.4 | n.d. | 2.24 |
| CuO/ZnO/Act. Carbon | 33.31 | 14.90 | n.d. | 2.24 |
| CuO/ZnO/TiO₂ | 24.5 | 10.5 | n.d. | 2.33 |

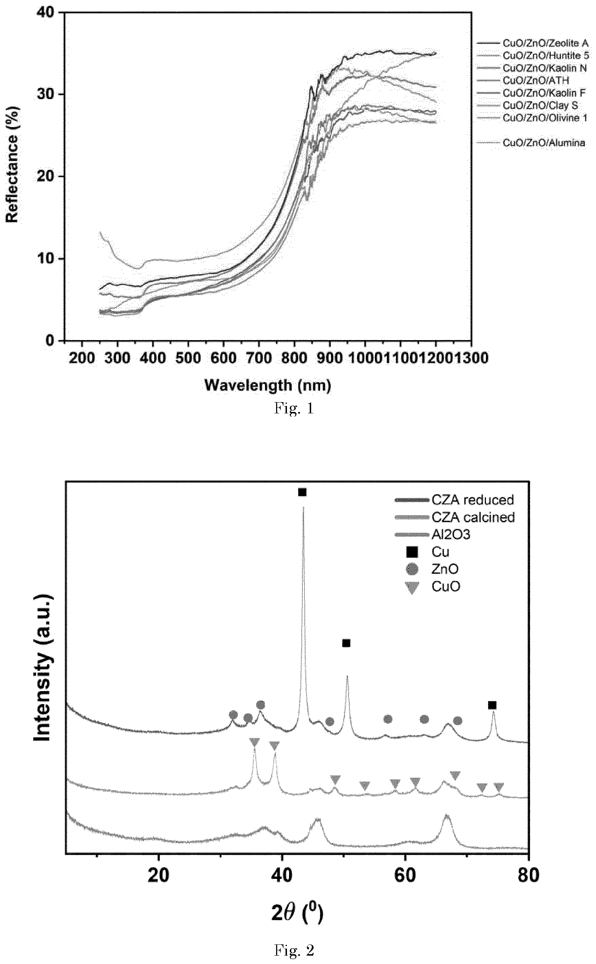

Figure 1 shows the UV-Vis reflectance spectra of the catalysts.
Figure 2 shows the powder X-ray diffraction spectrum (XRD) of the CZA catalyst in reduced (top) and calcined (middle) states. It also shows the XRD spectrum of the Al₂O₃ carrier material (bottom).

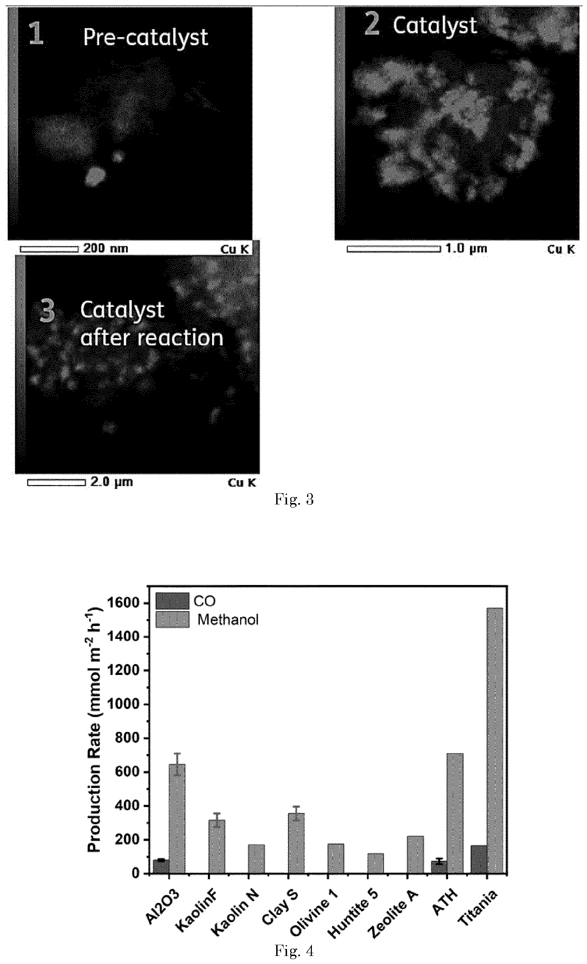

Figure 3 shows image of Energy Dispersive X-Ray (EDX) analysis of the CZA catalyst.

### Example 2 - validation of plasmonic catalysts

The sunlight powered CO₂ hydrogenation experiments were performed in a custom made continuous-flow fixed-bed photoreactor designed by TNO. The reactor is a 45 mL stainless photoreactor. The reactor has a quartz window on top to allow the catalyst bed illumination. The photoreactor is coupled to a solar simulator (Newport Class ABA, 94082A) with a 1400 W Xenon light source and an Air Mass 1.5 (AM1.5) filter to mimic the sunlight spectral distribution. The solar simulator has the possibility to introduce a high flus beam concentrator(Newport 81030) and cut-off filters. The illuminated area is 1.77 cm². About 100 mg of the catalyst was loaded in the reactor and reduced under H₂/N₂ @ 5 bar and 300 °C for 1 hour before use.

Subsequently, the catalyst was cooled down to room-temperature (about 20 °C), followed by a light irradiation experiment using the following conditions: 14 sun eq. intensity, 40 bar (g) pressure, 3:1 H₂:CO₂ ratio, WHSV -z 33 L g_{cat}⁻¹ h⁻¹. The reactants and the products were analyzed with an online Gas Chromatograph (GC). The experiment was conducted for a set number of hours to reach a steady-state production rate for a set amount of time. Based on the GC data, calculations regarding activity and selectivity (together with stability these are the descriptive parameters of the efficiency of our catalysts) were made.

Figure 4 shows the methanol production rate of the catalysts given in Table 1.

### Example 3 - influence of light intensity on catalyst activity

About 100 mg of the CZA catalyst prepared in Example 1 was loaded in the reactor and reduced under H₂/N₂ @ 5 bar and 300 °C for 1 hour before use.

Subsequently, the catalyst was cooled down to room-temperature (about 20 °C), followed by various light irradiation experiments using the following conditions: 40 bar (g), 3:1 H₂:CO₂ ratio, WHSV -z 33 L g_{cat}⁻¹ h⁻¹. Light intensity was varied for each experiment.

The reactants and the products were analyzed with an online Gas Chromatograph (GC). The experiment was conducted for a set number of hours to reach a steady-state production rate for a set amount of time. Based on the GC data, calculations regarding activity (together with stability these are the descriptive parameters of the efficiency of our catalysts) were made.

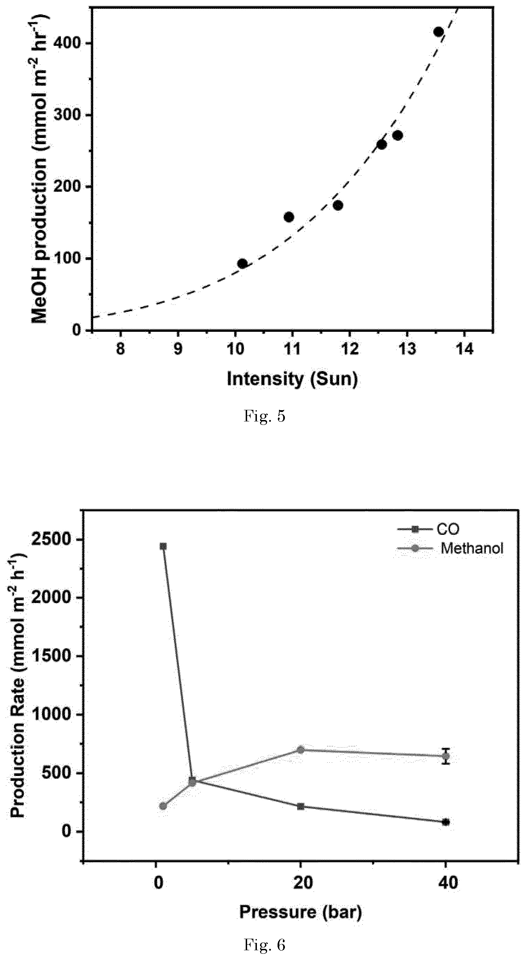

Figure 5 shows the methanol production rate of the CZA catalyst under different light intensities.

### Example 4 - influence of pressure on catalyst activity

About 100 mg of the CZA catalyst prepared in Example 1 is loaded in the reactor and reduced under H₂/N₂ @ 5 bar and 300 °C for 1 hour before use.

Subsequently, the catalyst was cooled down to room-temperature (about 20 °C), followed by various light irradiation experiments using the following conditions: 14 sun eq. intensity, 3:1 H₂:CO₂ ratio, WHSV -z 33 L g_{cat}⁻¹ h⁻¹. Pressure was varied for each experiment: 1, 5, 20 and 40 bar pressures were applied.

The reactants and the products were analyzed with an online Gas Chromatograph (GC). The experiment was conducted for a set number of hours to reach a steady-state production rate for a set amount of time. Based on the GC data, calculations regarding activity (together with stability these are the descriptive parameters of the efficiency of our catalysts) were made.

Figure 6 shows the methanol production rate of the CZA catalyst under different process pressures.

### Example 5 - influence of Cu/ZnO loading on catalyst activity

Various CZA catalysts were prepared according to a procedure as described in Example 1. The catalysts differed in Cu/ZnO loading whilst keeping the Cu/ZnO ratio constant.

About 100 mg of a CZA catalyst was loaded in the reactor and reduced under H₂/N₂ @ 5 bar and 300 °C for 1 hour before use.

Subsequently, the catalyst was cooled down to room-temperature (about 20 °C), followed by a light irradiation experiment using the following conditions: 14 sun eq. intensity, 40 bar (g) pressure, 3:1 H₂:CO₂ ratio, WHSV -z 33 L g_{cat}⁻¹ h⁻¹. The reactants and the products were analyzed with an online Gas Chromatograph (GC). The experiment was conducted for a set number of hours to reach a steady-state production rate for a set amount of time. Based on the GC data, calculations regarding activity (together with stability these are the descriptive parameters of the efficiency of our catalysts) were made.

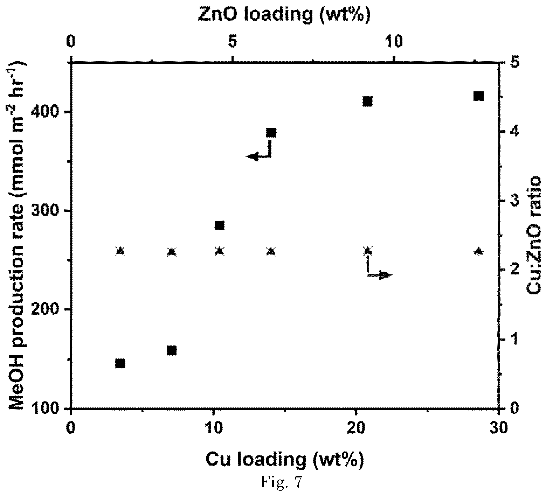

Figure 7 shows the methanol production rate of the CZA catalyst having varying Cu/ZnO loadings.

## Claims

1. Process for the photocatalytic production of methanol from carbon dioxide and/or carbon monoxide, said process comprising feeding a feed stream comprising carbon dioxide and/or carbon monoxide and a hydrogen stream into a reactor that contains a plasmonic catalyst comprising plasmonic Cu/Zn nanoparticles, and irradiating said plasmonic catalyst with light having a power intensity of at least 10 kW/m² at a pressure of at least 5 bar absolute, such that said carbon dioxide and hydrogen react to form methanol, and leading a product stream comprising methanol out of the reactor.

2. Process according to the previous claim, wherein the temperature inside the reactor is less than 225 °C, preferably 100 °C as determined by a thermocouple that is positioned in the reactor at least 2 cm away from the plasmonic catalyst.

3. Process according to any of the previous claims, wherein the plasmonic Zn/Cu nanoparticles comprise Cu and ZnO.

4. Process according to any of the previous claims, wherein the plasmonic nanoparticles comprise Cu and ZnO in a weight ratio in the range of 1 : 1 to 5 : 1, more preferably 1.5 : 1 to 4 : 1.

5. Process according to any of the previous claims, wherein the plasmonic catalyst comprises a carrier material for supporting the plasmonic nanoparticles, wherein the plasmonic nanoparticles comprise Cu and ZnO, and wherein the plasmonic catalyst comprises Cu in an amount in the range of 5 to 70 wt%, preferably 10 to 50 wt% and/or ZnO in an amount in the range of 2.5 to 40 wt%, preferably 5 to 35 wt%, based on the weight of the plasmonic catalyst.

6. Process according to any of the previous claims, wherein the plasmonic catalyst comprises a carrier material for supporting the plasmonic nanoparticles, wherein said carrier material is selected from the group consisting of aluminum oxides such as Al₂O₃, titanium oxides such as TiO₂₋ₓ, cerium oxides such as Ce₂O₃₋ₓ and/or CeO₂₋ₓ, zirconium oxides such as ZrO₂, activated carbon, kaolines such as Kaolin F, Koalin N, clays such as Clay S, olivines such as Olivine 1, huntites such as Huntite 5, zeolites such as Zeolite A, aluminum trihydrate, and combinations thereof, preferably wherein said active carrier comprises aluminum oxides such as Al₂O₃, titanium oxides such as TiO₂, cerium oxides such as CeO₂, zirconium oxides such as ZrO₂ or combinations thereof.

7. Process according to any of the previous claims, wherein the feed stream comprises carbon dioxide, which carbon dioxide and hydrogen react in the reactor to form methanol and possibly carbon monoxide, and wherein the mol ratio of methanol to carbon monoxide in the product stream is at least 5 : 1, preferably at least 6 : 1, more preferably at least 10 : 1.

8. Process according to any of the previous claims, having a methanol production selectivity, which is expressed as the molar amount of methanol over the molar amount of all carbon-containing products that are formed, of at least 80%, preferably at least 95%.

9. Process according to any of the previous claims, wherein the light comprises at least natural solar light and/or concentrated natural solar light.

10. Process according to any of the previous claims, wherein the light has a power of at least 12 kW/m² AM 1.5, preferably in the range of 15 to 100 kW/m² AM 1.5.

11. Process according to any of the previous claims, wherein the pressure inside the reactor is at least 7 bar absolute, preferably in the range of 7 to 60 bar absolute, more preferably 30 to 50 bar absolute.

12. Process according to any of the previous claims, wherein the hydrogen and carbon dioxide and/or carbon monoxide are fed into the reactor in a weight ratio hydrogen to carbon dioxide and/or carbon monoxide in the range of 6 : 1 to 1 : 1, preferably in a weight ratio in the range of 4 : 1 to 2 : 1, such as about 3 : 1.

13. Process according to any of the previous claims, wherein the reaction is not additionally externally heated.

14. Plasmonic catalyst comprising plasmonic Cu/Zn nanoparticles for use in a process according to any of the previous claims, wherein said plasmonic Cu/Zn nanoparticles comprise Cu and ZnO supported on a carrier material, wherein said carrier material is selected from the group consisting of aluminum oxides such as Al₂O₃, titanium oxides such as TiO₂, cerium oxides such as CeO₂, zirconium oxides such as ZrO₂, activated carbon, kaolinites such as Kaolin F and Koalin N, clay such as Clay S, olivines such as Olivine 1, huntites such as Huntite 5, zeolites such as Zeolite A, aluminum trihydrate, and combinations thereof, and combinations thereof, aluminum oxides such as Al₂O₃, titanium oxides such as TiO₂, cerium oxides such as CeO₂, zirconium oxides such as ZrO₂ or combinations thereof.

15. Plasmonic catalyst according to the previous claim, wherein the plasmonic nanoparticles comprise Cu and ZnO in a weight ratio in the range of 1.5 : 1 to 3 : 1, and wherein the plasmonic catalyst comprises Cu in an amount in the range of 10 to 70 wt% and ZnO in an amount in the range of 5 to 35 wt%, based on the weight of the plasmonic catalyst.
